Europäisches Patentamt

European Patent Office

Office européen des brevets

(19)

(11) Numéro de publication: **0 199 642**
**A1**

(12) **DEMANDE DE BREVET EUROPEEN**

(21) Numéro de dépôt: **86400818.0**

(22) Date de dépôt: **16.04.86**

(51) Int. Cl.⁴: **F 16 D 27/00**
**F 16 D 23/12**

(30) Priorité: **17.04.85 FR 8505779**

(43) Date de publication de la demande:
**29.10.86 Bulletin 86/44**

(84) Etats contractants désignés:
**DE GB IT SE**

(71) Demandeur: **VALEO**
**64 Avenue de la Grande Armée**
**F-75017 Paris(FR)**

(72) Inventeur: **Herbulot, Jean**
**80 Rue du Docteur Roux**
**F-95130 Franconville(FR)**

(72) Inventeur: **Escaillas, Gérard**
**17 Rue Coysevox**
**F-75018 Paris(FR)**

(74) Mandataire: **CABINET BONNET-THIRION**
**95 Boulevard Beaumarchais**
**F-75003 Paris(FR)**

(54) Embrayage à commande par moteur, notamment pour véhicule automobile.

(57) Il s'agit d'un embrayage dont la commande est à assurer par l'intermédiaire d'un organe d'action (20) à déplacer axialement.

Suivent l'invention, cet embrayage comporte une pièce (22), qui est rapportée sur son carter (19), qui porte elle-même un moteur (23), et qui présente, suivant l'axe de l'organe d'action (20), une cartouche (25) formant, par sa surface extérieure, un organe de support et de guidage (26) sur lequel est engagé l'organe d'action (20), et, par son volume intérieur, un logement (27) dans lequel est disposé un organe d'entraînement (28) du type vis écrou dont un quelconque des éléments vis-écrou est calé sur l'arbre de sortie (29) du moteur (23) tandis que l'autre est lié axialement à l'organe d'action (20).

Application, notamment, aux véhicules automobiles dépourvus à leur bord de toute source de fluide sous pression.

EP 0 199 642 A1

./...

FIG.2

"Embrayage à commande par moteur, notamment pour

véhicule automobile"

La présente invention concerne d'une manière générale les embrayages, notamment pour véhicules automobiles, et elle vise plus particulièrement le cas de l'équipement de véhicules automobiles lourds.

Le plus souvent l'embrayage équipant un tel véhicule lourd est un embrayage mécanique, c'est-à-dire un embrayage qui, pour le serrage d'un disque de friction contre un plateau de réaction, comporte un mécanisme sollicité élastiquement, et par exemple un mécanisme à diaphragme, et auquel il est associé, pour sa commande, un organe d'action, communément appelé butée de débrayage, à déplacer sensiblement suivant son axe.

Compte tenu des masses en jeu et du couple à passer, la charge à développer, sur un véhicule lourd, pour la commande de l'embrayage, c'est-à-dire pour le passage de celui-ci de son état d'engagement, disque de friction serré, à son état de désengagement, disque de friction desserré, nécessaire par exemple pour un changement de rapport de vitesses, ou, autrement dit, la force à appliquer à l'organe d'action correspondant pour un déplacement axial de celui-ci suffisant à un tel changement d'état de l'embrayage, est toujours importante.

En pratique, elle est le plus souvent supérieure à 500 N.

Sur un véhicule lourd, la commande de l'embrayage doit normalement être assistée.

Mais certains véhicules lourds sont dépourvus à bord de toute source de fluide sous pression, air comprimé ou huile, propre à une telle assistance.

L'embrayage, dans ce cas est souvent non pas un embrayage mécanique, dans le sens précisé ci-dessus, mais un embrayage centrifuge à commande électromagnétique, c'est-à-dire un embrayage comportant, pour le serrage d'un disque de friction, des masselottes sensibles à la force centrifuge.

Un tel embrayage a pour inconvénient majeur d'être l'objet d'un temps de réponse élevé à sa commande.

Par exemple, pour un changement de rapport de vitesses, il faut le temps nécessaire à l'excitation de sa partie électromagnétique, à la retombée de sa partie centrifuge, à l'enclenchement du nouveau rapport de vitesses recherché, à la désexcitation de la partie électromagnétique, et au déploiement de la partie centrifuge.

L'ensemble peut prendre plusieurs secondes.

Il peut en résulter des difficultés pour le véhicule concerné, notamment en côte, au détriment de sa maniabilité et de sa sécurité.

En outre, compte tenu de leur complexité, les embrayages centrifuges à commande électromagnétique ont encore pour inconvénient d'être relativement onéreux.

La présente invention a d'une manière générale pour objet une disposition permettant d'éviter ces inconvénients, et, donc, permettant d'assurer dans de bonnes conditions, notamment du point de vue économique, la commande d'un embrayage sur un véhicule lourd dépourvu de toute source fluide sous pression à son bord, tout en tirant avantageusement parti des dispositions particulières caractérisant par ailleurs usuellement un tel véhicule.

De manière plus précise, elle a pour objet un embrayage, notamment pour véhicule automobile, du genre auquel il est associé, pour sa commande, un organe d'action à déplacer sensiblement suivant son axe, cet embrayage étant d'une manière générale caractérisé en ce qu'il comporte une pièce, dite ci-après par simple commodité pièce intermédiaire, qui est rapportée sur son carter, qui porte, elle-même, un organe moteur rotatif, et qui présente, axialement, une cartouche, ladite cartouche formant, par sa surface extérieure, un organe de support et de guidage sur lequel est engagé ledit organe d'action, et, par son volume intérieur, un logement dans lequel est disposé un organe d'entraînement du type vis-écrou dont un quelconque des éléments vis-écrou est calé en rotation sur ledit organe moteur tandis que l'autre est lié axialement à l'organe d'action.

En effet, sur les véhicules lourds du genre intéressé, l'embrayage est usuellement localisé au-delà de la boîte de vitesses par rapport au moteur, c'est-à-dire au bout de l'ensemble d'entraînement que forme avec ce moteur cette boîte de vitesses, en sorte que, la place nécessaire à cet effet étant disponible, il est effectivement possible de rapporter axialement sur son carter un quelconque organe.

Suivant l'invention, il est précisément tiré parti de cette possibilité pour rapporter axialement un organe moteur sur le carter de l'embrayage.

De préférence, cet organe moteur est l'arbre de sortie d'un moteur électrique.

Il est ainsi avantageusement tiré parti du fait que, sur les véhicules lourds du genre intéressé, équipés usuellement d'un embrayage centrifuge à commande électromagnétique, il est normalement prévu le déploiement d'une ligne électrique pour l'alimentation de la commande électromagnétique correspondante.

Suivant l'invention, ces lignes électriques servent ici à la desserte du moteur électrique mis en oeuvre.

Par ailleurs, outre que l'organe d'entraînement du type vis-écrou conjointement mis en oeuvre présente, sous un encombrement réduit, et avec une grande robustesse, une capacité de charge importante et une grande durée de vie, il est avantageusement capable, avec une grande rigidité, d'une très grande précision de positionnement.

Le pas de sa vis peut en effet être très fin, de l'ordre par exemple d'un ou quelques millimètres.

Compte tenu de ce que, corollairement, la vitesse de rotation de l'arbre de sortie du moteur électrique formant l'organe moteur associé est relativement élevée, de l'ordre par exemple de 3000 à 4000 tours/mn, il suffit avantageusement d'un nombre relativement réduit de tours de cet arbre de sortie, inférieur à dix par exemple, pour assurer le déplacement axial de l'organe d'action nécessaire au passage de l'état d'engagement à l'état de désengagement de l'embrayage à commander.

Suffisant pour le travail à fournir, ce nombre de tours réduit conduit avantageusement à des temps de réponse faibles, de l'ordre d'une fraction de seconde par exemple, pour la commande correspondante.

Corollairement, l'embrayage peut avantageusement être un embrayage mécanique classique, et par exemple un embrayage à mécanisme à diaphragme, de technologie plus simple, de poids plus faible, et de coût plus réduit que les embrayages centrifuges à commande électromagnétique.

En bref, tout en satisfaisant aux contraintes d'emcombrement à respecter, la disposition suivant l'invention apporte une solution avantageusement simple aux problèmes de la commande d'un embrayage sur un véhicule lourd dépourvu à son bord de toute source de fluide sous pression, étant entendu cependant que son domaine d'application n'est pas nécessairement limité à un tel véhicule lourd.

Les caractéristiques et avantages de l'invention ressortiront d'ailleurs de la description qui va suivre, à titre d'exemple, en référence aux dessins schématiques annexés sur lesquels :

la figure 1 est une vue en coupe axiale d'un embrayage suivant l'invention ;

la figure 2 reprend, à échelle supérieure, la partie de la figure 1 repérée par un encart II sur celle-ci ;

les figures 3, 4 sont, échelle de la figure 2, des vues partielles en coupe transversales suivant respectivement les lignes III-III et IV-IV de cette figure 2.

Ces figures illustrent à titre d'exemple l'application de l'invention à un embrayage mécanique comportant, pour le serrage d'un disque de friction 10 contre un plateau de réaction 11, un mécanisme à diaphragme 12.

Un tel embrayage étant bien connu par lui-même, et ne faisant pas partie en soi de la présente invention, il ne sera pas décrit en détail ici.

Il suffira de rappeler que son mécanisme 12 comporte une pluralité de pièces globalement annulaires, à savoir un couvercle 13, par lequel il est adapté à être rapporté, par exemple par des vis, sur le plateau de réaction 11, un plateau de pression 14, pour serrage du disque de friction 10 contre le plateau de réaction 11, et, axialement disposé entre le couvercle 13 et le plateau de pression 14, un diaphragme 15, dont la partie périphérique 16, circulairement continue, forme rondelle Belleville et sollicite le plateau de pression 14 en direction du plateau de réaction 11 en prenant appui sur le couvercle 13, et dont la partie centrale 17, fragmentée en doigts radiaux par des fentes, forme le dispositif débrayeur propre à la commande de l'ensemble.

De manière usuelle, un tel embrayage est disposé à l'abri d'un carter 18, dont la partie centrale est en pratique ajourée par une ouverture 19.

De manière usuelle, également, il est associé, à un tel embrayage, pour sa commande, un organe d'action 20, communément appelé butée de débrayage, à déplacer sensiblement suivant son axe.

Un tel organe d'action 20 ne faisant pas non plus en propre l'objet de la présente invention, il ne sera donc pas décrit ici.

Il suffira d'indiquer que, pour la commande de l'embrayage, c'est-à-dire pour le passage de celui-ci de son état d'engagement, disque de friction 11 serré, à son état de désengagement, disque de friction 11 desserré, cet organe d'action 20 doit agir sur les extrémités des doigts radiaux que constitue la partie centrale 17 du diaphragme 15.

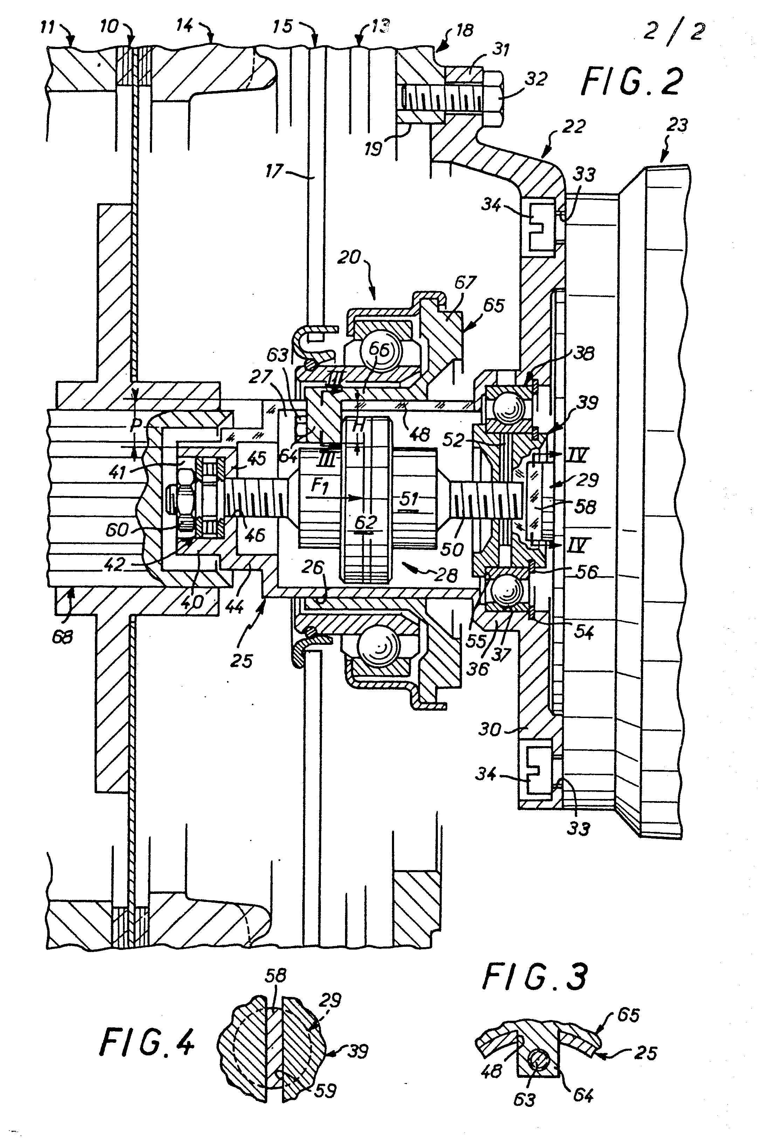

Dans la forme de réalisation représentée à titre d'exemple sur les figures, cette action de l'organe 20 sur l'extrémité des doigts radiaux du diaphragme 15 est une action de traction, c'est-à-dire une action qui, tel que schématisé par la flèche F1 sur la figure 2, doit s'exercer en direction opposée au plateau de réaction 11, en étant appliquée à celle des faces du diaphragme 15 qui est tournée vers celui-ci.

En outre, dans cette forme de réalisation, l'organe d'action 20 est une butée de débrayage autocentreuse à autocentrage maintenu.

Suivant l'invention, l'embrayage ainsi constitué comporte en outre une pièce 22, dite ici par simple commodité pièce intermédiaire, qui est rapportée sur son carter 18, en pratique autour de l'ouverture centrale 19 de celui-ci, qui porte, elle-même, un organe moteur rotatif 29, et qui présente, axialement, et donc suivant l'axe de l'ensemble, une cartouche 25, ladite cartouche 25 formant, par sa surface extérieure, un organe de support et de guidage 26 sur lequel est engagé ledit organe d'action 20, et, par son volume intérieur, un logement 27 dans lequel est disposé un organe d'entraînement du type vis-écrou 28 dont un quelconque des éléments vis-écrou, précisé ci-après, est calé en rotation sur l'organe moteur 29 tandis que l'autre est lié axialement à l'organe d'action 20.

Dans la forme de réalisation représentée, l'organe moteur 29 est constitué par l'arbre de sortie d'un moteur 23, et la pièce intermédiaire 22 comporte, transversalement, un flasque 30, qui, pour des raisons de commodité de montage, présente, d'une part, radialement, de place en place, à sa périphérie, des oreilles 31, pour sa fixation, par une première de ses faces, au carter 18, cette fixation se faisant par exemple à l'aide de vis 32, tel que représenté, et, d'autre part, des perçages 33, convenablement répartis circulairement dans sa partie courante, pour la fixation, sur l'autre de ses faces, et donc à l'extérieur du carter 18 du moteur 23, cette fixation se faisant également à l'aide de vis 34 par exemple.

La cartouche 25 associée fait axialement saillie, en porte-à-faux, sur ce flasque 30, sur celle des faces de celui-ci qui, opposée au moteur 23, est tournée vers l'embrayage à commander.

Globalement, la cartouche 25 forme une pièce de révolution.

A son raccordement au flasque 30 sur lequel elle fait saillie, elle forme, par un tronçon de plus grand diamètre 36, un logement 37 dans lequel est disposé, et calé axialement, tel que décrit plus en détail ci-après, un roulement 38 assurant le centrage d'un palier 39 pour l'organe d'entraînement 28.

Par un deuxième tronçon, qui en forme la partie courante, et qui est de moindre diamètre que le tronçon 36 précédent, la cartouche 25 forme l'organe de support et de guidage 26 sur lequel est engagé l'organe d'action 20.

A son extrémité opposée au flasque 30 sur lequel elle fait saillie, la cartouche 25 forme, par un tronçon de plus petit diamètre 40, un logement 41 dans lequel, tel que décrit plus en détail ci-après, est disposé, pour l'organe d'entraînement 28, un palier 42 formant butée.

En pratique, dans la forme de réalisation représentée, un tronçon de diamètre intermédiaire 44 s'étend entre ce tronçon d'extrémité 40 de la cartouche 25 et sa partie courante 26, avec, transversalement, entre ledit tronçon de diamètre intermédiaire 44 et ledit tronçon d'extrémité 40, une cloison 45 ajourée d'une ouverture 46 dans sa zone centrale.

La pièce intermédiaire 22 ainsi constituée peut être d'un seul tenant.

Elle peut aussi être par exemple réalisée en deux ou plusieurs coquilles convenablement affrontées l'une à l'autre si désiré.

Longitudinalement, la cartouche 25 qu'elle comporte présente, sur une partie au moins de sa longueur, et pour des raisons qui apparaîtront ci-après, au moins une fente 48.

En pratique, plusieurs fentes 48, trois par exemple, sont ainsi prévues longitudinalement sur la cartouche 25, en étant convenablement réparties circulairement autour de l'axe de celle-ci.

Chacune d'elles affecte, sur toute sa longueur, l'organe de support et de guidage 26 que constitue la partie courante de la cartouche 25.

De préférence, et c'est le cas notamment lorsque la pièce intermédiaire 22 est d'un seul tenant, chacune des fentes 48 de la cartouche 25 débouche axialement à l'extrémité libre de cette cartouche 25, c'est-à-dire à l'extrémité de celle-ci opposée au flasque 30 sur lequel elle fait saillie.

En pratique, dans la forme de réalisation représentée, chacune des fentes 48 affecte ainsi, non seulement la partie courante 26 de la cartouche 25, mais encore le tronçon de diamètre intermédiaire 44 de celle-ci, et, pour une partie de son épaisseur, son tronçon d'extrémité 40.

Soit P la profondeur d'une telle fente 48, mesurée entre, d'une part, son fond, sur le tronçon d'extrémité 40 de la cartouche 25, et, d'autre part, la surface extérieure de l'organe de support et de guidage 26 que constitue la partie courante de celle-ci.

En pratique, le moteur 23 mis en oeuvre est un moteur électrique, et l'organe moteur rotatif 29 que constitue son arbre de sortie est globalement dans le prolongement de l'organe d'entraînement 28.

Dans la forme de réalisation représentée, cet organe d'entraînement 28 est une vis à recirculation de rouleaux.

Une telle vis étant bien connue par elle-même, et ne faisant pas en soi l'objet de la présente invention, elle ne sera pas décrite ici.

Il s'agit par exemple d'une vis à recirculation de rouleaux du type de celles commercialisées sous la dénomination commerciale "TRANSROL".

Il suffira d'indiquer qu'une telle vis comporte, en prise l'un avec l'autre, d'une part un élément interne 50, formant vis, et d'autre part un élément externe 51, formant écrou.

Par ses extrémités, l'élément formant vis 50 est pris entre les paliers 39, 42, et il est en outre calé axialement par une goupille 52 sur le premier de ceux-ci.

En pratique, le palier 39 est lui-même calé axialement sur le roulement 38 qui en assure le centrage, ce roulement 38, qui est lui-même calé axialement sur la pièce intermédiaire 22 par un anneau élastique 54 en prise avec celle-ci, étant pris entre, d'une part, un épaulement 55 du palier 39 et, d'autre part, un anneau élastique 56 en prise avec ce palier 39.

De préférence, et tel qu'illustré notamment par la figure 4, entre l'élément formant vis 50 de l'organe d'entraînement 28 et l'arbre de sortie 29 du moteur 23, il est établi une simple liaison en rotation, du type à tournevis par exemple, tel que représenté, à l'exclusion de toute liaison axiale, pour une réduction de l'encombrement axial de l'ensemble.

Dans la forme de réalisation représentée, l'arbre de sortie 29 du moteur 23 comporte un prolongement en forme de lame 58, qui s'étend diamétralement, et par lequel il est en prise, suivant un simple engagement axial, avec une fente de largeur complémentaire 59 prévue à cet effet, diamétralement, sur la face correspondante du palier 39 avec lequel est en prise l'élément formant vis 50 de l'organe d'entraînement 28.

Corollairement, à l'autre extrémité de cet élément formant vis 50, le palier 42, qui, comme déjà indiqué ci-dessus, forme une butée, et, plus précisément, une butée axiale, à billes ou à rouleaux par exemple, est pris entre, d'une part, la cloison ajourée 45 qui s'étend transversalement entre le tronçon d'extrémité 40 de la cartouche 25 et son tronçon de diamètre intermédiaire 44, et, d'autre part, un écrou 60 rapporté par vissage sur ladite autre extrémité de cet élément formant vis 50, pour encaisser, en service, la réaction axiale dont peut être l'objet ce dernier.

Dans ce qui précède, il ressort que, dans la forme de mise en oeuvre représentée, c'est l'élément formant vis 50 de l'organe d'entraînement 28 qui, pris entre le palier 39 et l'écrou 60, est calé axialement.

L'élément formant écrou 51, par contre, est libre.

Dans sa partie médiane, il présente radialement en saillie une collerette 62, et, à celle-ci, se trouvent de place en place assujettis, par des vis 63, des bras 64, qui, traversant la cartouche 25 à la faveur des fentes 48 de celle-ci, en assurent la liaison axiale à l'organe d'action 20.

Par exemple, et tel que représenté, ces bras 64 sont d'un seul tenant avec une pièce 65, qui, appartenant à l'organe d'action 20, présente, axialement, un manchon 66 par lequel elle est engagée à coulissement sur l'organe de support et de guidage 26 que constitue la partie courante de la cartouche 25, et, transversalement, un flasque 67.

En pratique, les bras 64 font saillie radialement, en direction de l'axe de l'ensemble, sur la surface interne du manchon 66 de cette pièce 65, du côté de la collerette 62 de l'élément formant écrou 51 tourné vers l'extrémité libre de la cartouche 25, c'est-à-dire vers l'extrémité de cette cartouche 25 opposée au flasque 30 sur lequel elle fait saillie.

Leur hauteur H à compter de cette surface interne est inférieure à la profondeur P des fentes 38 de la cartouche 25.

Par suite, cette cartouche 25 peut être engagée axialement sur la pièce 65 de l'organe d'action 20, par l'extrémité axialement débouchant de ces fentes 48.

Compte tenu du développement axial nécessaire à son élément formant vis 50, l'organe d'entraînement 28 traverse axialement de part en part l'organe d'action 20, en sorte que la cartouche 25 de la pièce intermédiaire 22 s'étend largement au-delà du diaphragme 15 par rapport au moteur 23.

En pratique, dans la forme de réalisation représentée, son tronçon d'extrémité 40 et une partie de son tronçon de diamètre intermédiaire 44 sont même engagés axialement dans l'arbre de sortie 68 de la boîte de vitesses convenablement évidé à cet effet.

En service, il suffit d'alimenter le moteur électrique 23 pour que, l'organe moteur rotatif que constitue son arbre de sortie 29 entraînant l'élément formant vis 50 de l'organe d'entraînement 28, l'élément formant écrou 51 de celui-ci assure le déplacement axial de l'organe d'action 20 nécessaire au passage de l'état d'engagement à l'état de désengagement de l'embrayage à commander.

Bien entendu, la présente invention ne se limite pas à la forme de réalisation décrite et représentée, mais englobe toute variante d'exécution.

En particulier, au lieu d'être constitué par une vis à recirculation de rouleaux, l'organe d'entraînement 28 pourrait par exemple être une vis à recirculation de billes, notamment pour des charges moins importantes.

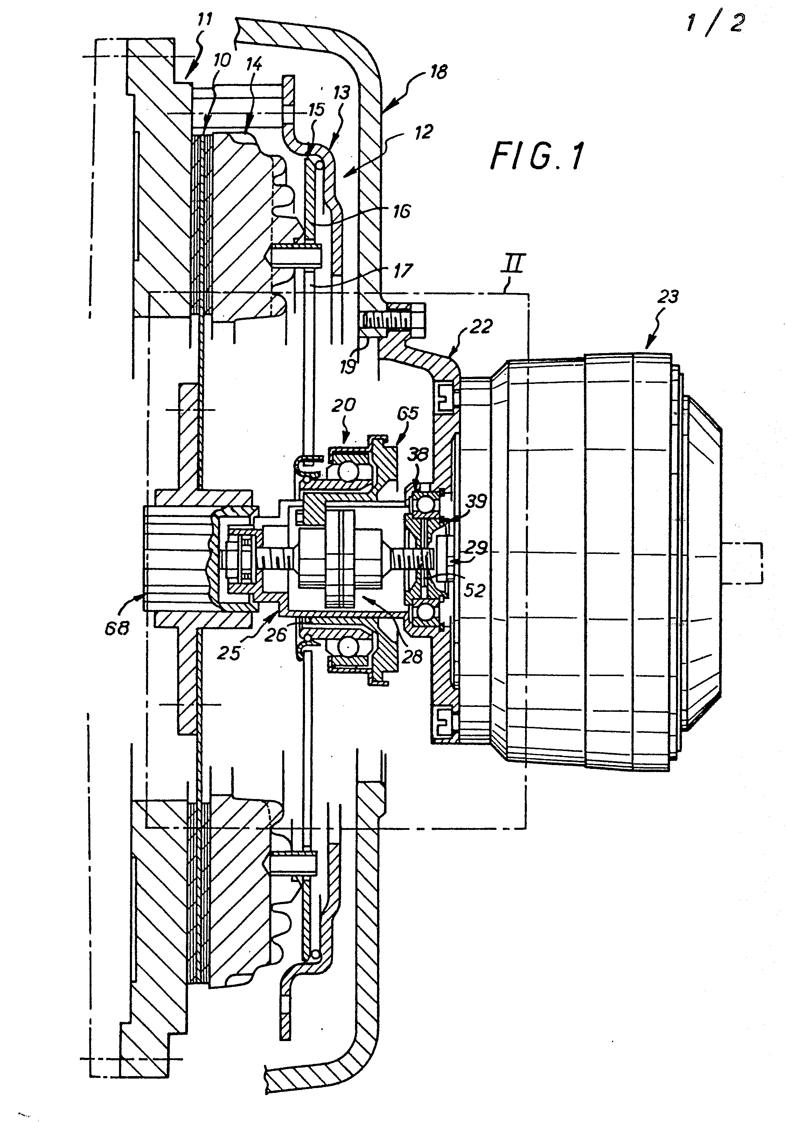

En outre, et tel que schématisé en traits interrompus à la figure 1, l'arbre de sortie 29 du moteur 23 peut, à son extrémité opposée à l'organe d'entraînement 28, être pourvu d'un prolongement 60 accessible de l'extérieur, pour permettre d'actionner effectivement, de préférence manuellement, cet organe d'entraînement 28, en cas de non fonctionnement du moteur 23.

Enfin, le domaine d'application de l'invention n'est pas limité à celui des seuls embrayages sur le dispositif débrayeur duquel il faut agir en traction pour en commander le passage en état de dégagement, mais s'étend aussi bien à celui des embrayages sur le dispositif débrayeur duquel il faut au contraire agir en poussée pour une telle commande.

REVENDICATIONS

1. Embrayage, notamment pour véhicule automobile, du genre auquel il est associé, pour sa commande, un organe d'action (20) à déplacer sensiblement suivant son axe, caractérisé en ce qu'il comporte, une pièce (22), dite ici par simple commodité pièce intermédiaire, qui est rapportée sur son carter (18), qui porte, elle-même, un organe moteur rotatif (29), et qui présente, axialement, une cartouche (25), ladite cartouche (25) formant, par sa surface extérieure, un organe de support et de guidage (26) sur lequel est engagé ledit organe d'action (20), et, par son volume intérieur, un logement (27) dans lequel est disposé un organe d'entraînement du type vis-écrou (28), dont un quelconque des éléments vis-écrou est calé en rotation sur l'organe moteur (29) tandis que l'autre est lié axialement à l'organe d'action (20).

2. Embrayage suivant la revendication 1, caractérisé en ce que la pièce intermédiaire (22) comporte un flasque (30), qui présente des oreilles (31) pour sa fixation au carter (18), et sur lequel fait saillie sa cartouche (25).

3. Embrayage suivant l'une quelconque des revendications 1, 2, caractérisé en ce que, sur une partie au moins de sa longueur, la cartouche (25) de la pièce intermédiaire (22) présente longitudinalement au moins une fente (48) à la faveur de laquelle elle est traversée radialement par un bras (64) liant axialement l'organe d'action (20) à l'un des éléments vis-écrou de l'organe d'entraînement (28).

4. Embrayage suivant la revendication 3, caractérisé en ce que la fente (48) de la cartouche (25) de la pièce intermédiaire (22) débouche axialement à l'extrémité libre de ladite cartouche (25).

5. Embrayage suivant l'une quelconque des revendications 3, 4, caractérisé en ce que plusieurs fentes (48), réparties circulairement, sont prévues longitudinalement sur la cartouche (25) de la pièce intermédiaire (22).

6. Embrayage suivant l'une quelconque des revendications 2 à 5, caractérisé en ce que, à son raccordement au flasque (30) sur lequel elle fait saillie, la cartouche (25) de la pièce intermédiaire (22) forme, par un tronçon de plus grand diamètre (36), un logement (37) dans lequel est disposé, et calé axialement, un roulement (38) assurant le centrage d'un palier (39) pour l'organe d'entraînement (28).

7. Embrayage suivant l'une quelconque des revendications 2 à 6, caractérisé en ce que, à son extrémité opposée au flasque (30) sur lequel elle fait saillie, la cartouche (25) de la pièce intermédiaire (22) forme, par un tronçon de plus petit diamètre (40), un logement (41) dans lequel est disposé, pour l'organe d'entraînement (28), un palier (42) formant butée.

8. Embrayage suivant l'une quelconque des revendications 1 à 7, caractérisé en ce que l'organe d'entraînement (28) est une vis à recirculation de rouleaux.

9. Embrayage suivant l'une quelconque des revendications 1 à 8, caractérisé en ce que celui des éléments vis-écrou de l'organe d'entraînement (28) qui est lié axialement à l'organe d'action (20) en est l'écrou (51).

10. Embrayage suivant l'une quelconque des revendications 1 à 9, caractérisé en ce que l'organe moteur rotatif (29) est formé par l'arbre de sortie d'un moteur (23) rapporté sur la pièce intermédiaire (22) à l'extérieur du carter (18), et il est globalement dans l'alignement de l'organe d'entraînement (28).

11. Embrayage suivant l'une quelconque des revendications 1 à 10, caractérisé en ce que le moteur (23) est un moteur électrique.

12. Embrayage suivant l'une quelconque des revendications 10, 11, caractérisé en ce que, pour la fixation du moteur (23) le flasque (30) de la pièce intermédiaire (22) présente des perçages.

13. Embrayage suivant les revendications 9, 10, prises conjointement, caractérisé en ce que, entre la vis (50) de l'organe d'entraînement (28) et l'organe moteur (29), il est établi une simple liaison en rotation.

14. Embrayage suivant l'une quelconque des revendications 1 à 13, caractérisé en ce que l'organe d'entraînement (28) traverse axialement de part en part l'organe d'action (20).

15. Embrayage suivant l'une quelconque des revendications 1 à 14, caractérisé en ce que la pièce intermédiaire (22) est d'un seul tenant.

16. Embrayage suivant l'une quelconque des revendications 1 à 15, caractérisé en ce que, pour le serrage d'un disque de friction (10) contre un plateau de réaction (11), il comporte, de manière connue en soi, un mécanisme à diaphragme (12) avec le diaphragme (16) duquel coopère l'organe d'action (20).

FIG.1

0199642

2 / 2

FIG.2

FIG.3

FIG.4

Office européen
des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 571 848 (EHLERS)<br><br>* En entier *<br><br>--- | 1,7,9-<br>11,13-<br>16 | F 16 D 27/00<br>F 16 D 23/12 |
| Y | GB-A- 372 091 (IMPERIAL CHEMICAL)<br><br>* En entier *<br><br>--- | 1,7,9-<br>11,13-<br>16 | |
| A | | 2 | |
| Y | DE-C- 686 284 (KNORR)<br>* En entier *<br><br>--- | 7 | |
| A | | 1,6 | DOMAINES TECHNIQUES RECHERCHES (Int. Cl.4) |
| A | US-A-4 440 035 (FOULK)<br><br>--- | | F 16 D 23/00<br>F 16 D 27/00<br>F 16 D 29/00<br>F 16 H |
| A | GB-A-2 127 917 (SOUTHAM)<br><br>--- | | |
| A | GB-A-1 188 724 (BORG-WARNER)<br><br>--- | | |
| A | FR-A-2 541 793 (VALEO)<br><br>--- -/- | | |

Le présent rapport de recherche a été établi pour toutes les revendications

| Lieu de la recherche | Date d'achèvement de la recherche | Examinateur |
|---|---|---|
| LA HAYE | 24-06-1986 | BALDWIN D.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

**0199642**
Numéro de la demande

EP 86 40 0818

| Catégorie | Citation du document avec indication, en cas de besoin, des parties pertinentes | Revendication concernée | CLASSEMENT DE LA DEMANDE (Int. Cl. 4) |
|---|---|---|---|
| A | BE-A- 338 734 (TODT) | | |
| | --- | | |
| A | US-A-2 521 607 (ROHN) | | |
| | ----- | | |

**DOCUMENTS CONSIDERES COMME PERTINENTS**     Page 2

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 24-06-1986 | BALDWIN D.R. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

OEB Form 1503 03 82